# EUROPEAN PATENT APPLICATION

(11) **EP 2 670 221 A1**
(43) Date of publication of application: **04.12.2013**
(21) Application number: 12170406.8
(22) Date of filing: 01.06.2012
(51) Int. Cl.: H05B 37/02

(54) **An apparatus, a method, an arrangement and a computer program for controlling operation of a light source**

(71) Applicant: Helvar Oy Ab, 03600 Karkkila (FI)
(72) Inventor: Korhonen, John Vilhelm, FI-05830 HYVINKÄÄ (FI)
(74) Representative: Berggren Oy Ab

(57) **Abstract**

An apparatus for controlling operation of a light source is provided. The apparatus comprises a detector configured to obtain a sequence of values of a control parameter indicating an environmental condition in a predetermined location. The apparatus further comprises a controller configured to provide a first control signal for setting the light source into a preparatory mode in response to the value of the control parameter at a first moment of time meeting a first criterion for setting the light source into preparatory mode, and to provide a second control signal for setting the light source off in response to the value of the control parameter failing to meet a second criterion for igniting the light source within a predetermined period of time after the first moment of time. Furthermore, a corresponding method and computer program are provided. Moreover, an arrangement is provided, the arrangement comprising the apparatus for controlling operation of a light source, a sensor apparatus for providing the sequence of values of a control parameter to the control apparatus, and a driver apparatus for driving a light source in accordance with the first and second control signals provided by the control apparatus.

## Description

### FIELD OF THE INVENTION

The invention relates to a control of operation of a light source. In particular, the invention relates to an apparatus, a method, an arrangement and a computer program for controlling operation of a light source. As an example, the inventive apparatus, method, arrangement and/or the computer program may be employed to control operation of a light source via an apparatus configured to drive the light source, such as a fluorescent lamp, a high-intensity discharge (HID) lamp, one or more light-emitting diodes (LEDs), etc.

### BACKGROUND OF THE INVENTION

Many lighting elements or lighting systems employ electronic ballasts or corresponding driving apparatuses to drive one or more light sources. Such lighting elements or lighting systems typically have an inherent temporal delay between receiving a command or an instruction to turn on a light source and the actual ignition of the light source. For example in case of a fluorescent lamp the pre-heating of cathodes of the lamp carried out in order to facilitate ignition of the fluorescent lamp and to provide prolonged usage time of the lamp introduces a preparatory mode between the off state and the ignition of the lamp resulting in such a temporal delay between receiving a command to turn on the lamp and the actual ignition of the lamp. Such a delay reduces the responsiveness of the lighting element or the lighting system to an event triggering the command to ignite a lamp, thereby reducing the perceived quality of operation.

For example in a sensor operated arrangement where a command to ignite the light source is issued in response to a sensor indicating a predetermined condition being fulfilled such delay between the condition to ignite the light source being fulfilled and the actual ignition of the light source may cause inconvenience or even a danger to a user.

### SUMMARY OF THE INVENTION

It is an object of the present invention to provide an apparatus, a method, an arrangement and a computer program for controlling operation of a light source in a manner that facilitates timely ignition of the light source in a sensor operated arrangement.

The objects of the invention are reached by an apparatus, a method, a computer program and an arrangement as defined by the respective independent claims.

According to a first aspect of the invention, an apparatus for controlling operation of a light source is provided. The apparatus comprises a detector configured to obtain a sequence of values of a control parameter indicating an environmental condition in a predetermined location. The apparatus further comprises a controller configured to provide a first control signal for setting the light source into a preparatory mode in response to the value of the control parameter at a first moment of time meeting a first criterion for setting the light source into preparatory mode, and to provide a second control signal for setting the light source off in response to the value of the control parameter failing to meet a second criterion for igniting the light source within a predetermined period of time after the first moment of time.

According to a second aspect of the invention a method for controlling operation of a light source is provided. The method comprises obtaining a sequence of values of a control parameter indicating an environmental condition in a predetermined location, providing a first control signal for setting the light source into a preparatory mode in response to the value of the control parameter at a first moment of time meeting a first criterion for setting the light source into preparatory mode, and providing a second control signal for setting the light source off in response to the value of the control parameter failing to meet a second criterion for igniting the light source within a predetermined period of time after the first moment of time.

According to a third aspect of the invention, a computer program for controlling operation of a light source is provided. The computer program includes one or more sequences of one or more instructions which, when executed by one or more processors, cause an apparatus to at least perform the method according to the second aspect of the invention.

The computer program may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to the second aspect of the invention.

According to a fourth aspect of the invention, an arrangement for controlling operation of a light source is provided. The arrangement comprises a control apparatus according to the first aspect of the invention, a sensor apparatus for providing the sequence of values of a control parameter to the control apparatus, and a driver apparatus for driving a light source in accordance with the first and second control signals provided by the control apparatus.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 schematically illustrates an exemplifying arrangement in accordance with an embodiment of the invention.
Figure 2 schematically illustrates an exemplifying apparatus in accordance with an embodiment of the invention.
Figure 3 schematically illustrates an exemplifying arrangement in accordance with an embodiment of the invention.
Figure 4 schematically illustrates an exemplifying apparatus in accordance with an embodiment of the invention.
Figure 5 illustrates a method according to an embodiment of the invention.

### DETAILED DESCRIPTION

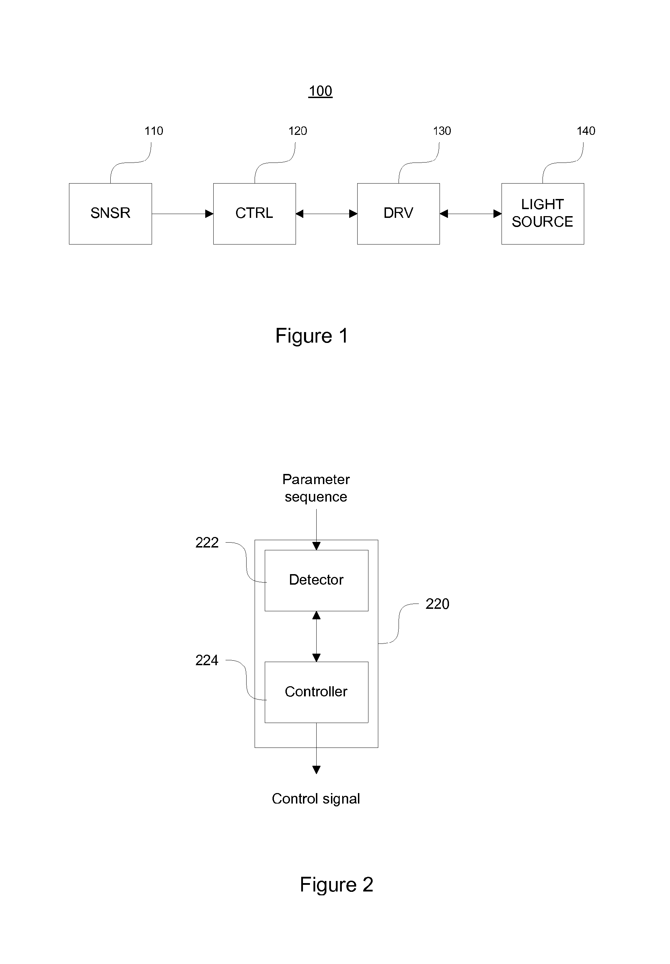

Figure 1 schematically illustrates an exemplifying arrangement 100 comprising a sensor apparatus 110, a control apparatus 120, a driver apparatus 130 and a light source 140.

The sensor apparatus 110 comprises one or more sensors. A sensor is configured to observe an environmental condition at a predetermined location, and the sensor apparatus 110 may be configured to provide a sensor signal indicative of the current environmental condition to the control apparatus 120 on basis of the environmental condition observed by the respective sensor.

The control apparatus 120 may be configured to receive sensor signals from the sensor apparatus 110 and provide control signals to the driver apparatus 130 in dependence of the sensor signals and possibly in dependence of the current state of the light source 140. In particular, the control signals may comprise control signals causing the light source 140 to be set on, i.e. to be ignited, and/or control signals causing the light source 140 to be set off. The control apparatus 120 may be configured to maintain information on current state of the light source 140 or obtain information on current state of the light source 140, e.g. whether the light source 140 is currently on or off, from the driver apparatus 130 and to provide control signals in dependence of the current state of the light source 140. The control apparatus 120 is described in more detail hereinbefore.

The driver apparatus 130, in turn, may be configured to change and/or monitor the state of the light source 140, e.g. to set the light source 140 on or off, in accordance with the control signals received from the control apparatus 120.

The driver apparatus 130 may comprise for example an electronic ballast configured to drive a fluorescent lamp and, consequently, the light source 140 may comprise a fluorescent lamp. As other examples, the driver apparatus 130 may comprise a ballast or other driving device configured to drive a light source of different type, such as a HID lamp, a LED device, an electric bulb, etc.

The sensor apparatus 110 and the control apparatus 120 may be implemented as logical units of a single apparatus. As another alternative, the control apparatus 120 and the driver apparatus 130 may be implemented as logical units of a single apparatus. As a further alternative, the sensor apparatus 110, the control apparatus 120 and the driver apparatus 130 may be implemented as logical units of a single apparatus. The light source 140 may be coupled to the driver apparatus 130 or to an apparatus comprising the driver apparatus 130.

Instead of a single light source 140, a variation of the arrangement 100 may comprise a number of light sources 140 driven by the driving arrangement 130. Moreover, instead of a single driver apparatus 130 a variation of the arrangement 100 may comprise a number of driver apparatuses 130, each configured to receive the control signal from the control apparatus 120 and configured to drive one or more light sources 140.

As already referred to hereinbefore, the sensor apparatus 110 may comprise one or more sensors, each sensor configured to observe an environmental condition at a predetermined location. The sensor apparatus 110 may be configured to provide a sensor signal indicative of the current environmental condition to the control apparatus 120 on basis of the environmental condition observed by a sensor. In particular, the sensor signal may comprise a value of a control parameter indicating the environmental condition as currently observed by the sensor.

Hence, the sensor apparatus 110 may be configured to provide a sensor signal comprising a sequence of values of a control parameter. The sensor apparatus 110 may be configured to provide a value of the control parameter for example continuously or according to a predetermined pattern, e.g. periodically at a predetermined frequency. Additionally or alternatively, the sensor apparatus 110 may be configured to provide a value of the control parameter in response to the environmental condition at the first location exhibiting a change exceeding a predetermined threshold.

Depending on a type of the sensor, either an increasing or decreasing value of a control parameter provided by the sensor may serve as an indication of a change in the respective environmental condition that may require the light source 140 to be turned on. In the following, a sensor configured to observe an environmental condition increase of which may serve as an indication to ignite the light source 140 is referred to as a sensor of a first type, whereas a sensor configured to observe an environmental condition decrease of which may serve as an indication to ignite the light source 140 is referred to as a sensor of a second type.

An example of a sensor of the first type is a passive infrared (PIR) sensor, as known in the art, configured to measure infrared light radiating from objects within its field of view. A level of infrared light or a change thereof may be considered as indicative of an object leaving, entering or residing within the field of view of the PIR sensor at the predetermined location. In other words, the environmental condition monitored by a PIR sensor is a presence of an object in the predetermined location. Consequently, the sensor apparatus 110 may be configured to determine and provide a sensor signal on basis of the level of infrared radiation in the predetermined location. Such a sensor signal may comprise one or more values of a control parameter indicative of the current level of infrared radiation in the predetermined location and/or one or more values of a control parameter indicative of the change in the level of infrared radiation in the predetermined location. Such a sensor signal may be considered to serve as an indication of a probability of a presence of an object, e.g. a person, in the predetermined location, such that higher level of infrared radiation implies higher probability of a presence of an object.

Another example of a sensor of the first type is a radar apparatus as known in the art, e.g. a microwave radar, configured to transmit radio waves and receive reflections thereof indicative of objects in the transmission path of the radio waves. In other words, the environmental condition monitored by a radar apparatus is a presence of an object at the predetermined location. The sensor apparatus 110 may be configured to provide a sensor signal indicative of characteristics of one or more objects observed at the predetermined location by the radar apparatus. Consequently, the control apparatus 120 may be configured to derive a value of a control parameter indicative of a probability of a presence of at least one object, e.g. a person, in the predetermined location on basis of such a sensor signal, such that a higher value of the control parameter implies higher probability of a presence of at least one object. Derivation of the value of the control parameter may be based on e.g. the number and/or size of the objects indicated by the sensor signal provided by the sensor apparatus 110 on basis of a radar apparatus. Instead of the derivation of the value of the control parameter being carried out in control apparatus 120, the sensor apparatus 110 may be configured to derive the value of the control parameter on basis of a sensor signal, as described hereinbefore.

As an example of a sensor of the second type, a sensor comprised in the sensor apparatus 110 may be a sensor configured to measure the level of visible light in the predetermined location. In particular, a sensor configured to measure the level of visible light in the predetermined location may be configured to measure the level of ambient light. Examples of such a sensor include a photoresistor, a photodiode, a LED, etc., as known in the art. Hence, the environmental condition monitored by such a sensor is the level of visible light at the predetermined location. Consequently, the sensor apparatus 150 may be configured to provide a sensor signal comprising a value indicative of the level of visible light at the predetermined location.

Figure 2 schematically illustrates the apparatus 220 for controlling operation of the light source 140. The apparatus 220 may act as the control apparatus 120 or the control apparatus 120 may comprise the apparatus 220. The apparatus 220 comprises a detector 222 for obtaining a sensor signal and a controller 224 for providing control signal for controlling operation of the light source 140.

The detector 222 may be configured to obtain a sequence of values of a control parameter indicating an environmental condition in a predetermined location by receiving a sensor signal originating from the sensor apparatus 110. As indicated in the exemplifying arrangement 100 illustrated in Figure 1, the sensor apparatus 110 is typically an apparatus separate from the apparatus 220, connected to the apparatus 220. In such an arrangement the detector 222 may hence be considered to comprise an input or an interface for receiving the sequence of values of a control parameter indicating the environmental condition. On the other hand, the sensor apparatus 110 or the one or more sensors may be integrated to or comprised in the apparatus 220, e.g. such that the detector 222 comprises one or more sensors for observing one or more environmental conditions in order to obtain respective sequences of values of a control parameter. The detector 222 may receive the sensor signal either directly from the sensor apparatus 110 or via an intervening component or apparatus. The detector 222 may be configured to receive the sensor signal via a communication interface, e.g. directly from the sensor apparatus 110, or the detector 222 may be configured to read control signal and/or the value(s) of parameter(s) included therein from a memory in the apparatus 220 or in another apparatus, e.g. in the sensor apparatus 110.

The controller 224 may be configured to determine one or more control signals in dependence of received values of the control parameter and/or to provide the one or more control signals to the driver apparatus 130. The one or more control signals may be provided to the driver apparatus 130 either directly or via an intervening component or apparatus. In particular, the one or more control signals provided by the controller 224 may comprise e.g. control signals configured to cause the light source 140 to be ignited and/or control signals configured to cause the light source 140 to be set off, determined and/or provided in dependence of the characteristics of the sensor signal received from the sensor apparatus 250, e.g. in dependence of the value or values of the control parameter received in the sensor signal.

For some light source switching from the off state to the on state, i.e. the ignition of the light source 140, may require switching from the off state to the on state via an intermediate state. An intermediate state may be required e.g. in order to prepare the light source 140 for ignition. The light source 140 may require an intermediate state of a predetermined fixed duration or the intermediate state may have a duration depending on a condition associated with the light source 140, e.g. the intermediate state may be completed once the condition associated with the light source 140 is fulfilled. Such an intermediate state may be referred to as a preparatory mode, and the duration of the preparatory mode may be referred to as a preparatory period. As an example of such a preparatory mode, a fluorescent lamp may require a preparatory period for pre-heating in order to heat the cathodes of the fluorescent lamp into a desired temperature before ignition of the lamp from the off state.

As an example of a consequence of such a preparatory period, for a light source or a lamp requiring a preparatory mode when switching from the off state to the on state a delay corresponding to the duration of the preparatory period is encountered between the value of the control parameter meeting the predetermined criterion and the actual ignition of the light source 140.

The controller 224 may be configured to provide a first control signal for setting the light source 140 into a preparatory mode in response to the value of the control parameter at a first moment of time meeting a criterion for setting the light source 140 into preparatory mode and to provide a second control signal for setting the light source 140 off in response to the value of the control parameter failing to meet a criterion for igniting the light source 140 within a predetermined period of time after the first moment of time. The criterion for setting the light source 140 into preparatory mode may be referred to in the following as the first criterion, whereas the criterion for setting the light source 140 off may be referred to in the following as the second criterion.

The controller 224 may be further configured to provide a further control signal for setting the light source 140 off in response to the value of the control parameter failing to meet the first criterion. In particular, the controller 224 may be configured to provide a further control signal for setting the light source 140 off in response to the value of the control parameter at the first moment of time meeting the first criterion but the value of the control parameter subsequently failing to meet the first criterion within the predetermined period of time after the first moment of time.

As a first example, the first control signal may be configured to cause the light source 140 to be set into the preparatory mode and to cause the light source 140 to be subsequently ignited after completion of the preparatory mode without a further explicit control signal. This may be considered as an ordinary 'lights on' command.

Consequently, the driver apparatus 130 may be configured to, in response to the first control signal, control the light source 140 to be set (from the off state) into the preparatory mode and further to ignite the light source 140 once the preparatory period has been completed without a further explicit control signal or other command to proceed from the preparatory mode to the ignition of the light source 140. In contrast, the driver apparatus 130 may be configured to, in response to the second control signal, control the light source 140 to be set off. Hence, if received during the preparatory period, the second control signal also causes the preparatory period being terminated before proceeding to the actual ignition of the light source 140.

As a variation of the first example described hereinbefore, a second example is described in the following. In the second example the first control signal may be configured to cause the light source 140 to be set into the preparatory mode without igniting the light source 140 after the preparatory period is completed. Moreover, in the second example the controller 224 may be configured to provide a third control signal configured to cause the light source 140 to be ignited in response to the value of the control parameter meeting the second criterion within said predetermined period of time after the first moment of time. Hence, instead of using a single 'lights on' command to set the light source 140 into the preparatory mode and subsequently (automatically) to ignite the light source 140, a two-phase signalling first setting the light source 140 into the preparatory mode in response to a first command and subsequently igniting the light source 140 in response to another command is employed.

Consequently, the driver apparatus 130 may be configured to, in response to the first control signal, control the light source 140 to be set (from the off state) into the preparatory mode and control the light source 140 to stay in the preparatory mode until a further control signal instructing the driver apparatus 130 to control the light source 140 to exit the preparatory mode or until an event that requires the driver apparatus 130 to control the light source 140 to exit the preparatory mode. Such a control signal instructing the driver apparatus 130 to cause the light source 140 to exit the preparatory mode may be for example the third control signal instructing the driver apparatus 130 to control the light source 140 to be ignited, or the second control signal instructing the driver apparatus 130 to control the light source 140 to be set off.

As a variation of the second example, the control apparatus 130 may be configured to exit the preparatory mode by controlling the light source 140 to be set off after a predefined maximum preparatory period of intermediate state in order to avoid the light source 140 to be kept in the preparatory mode for an excessive period of time.

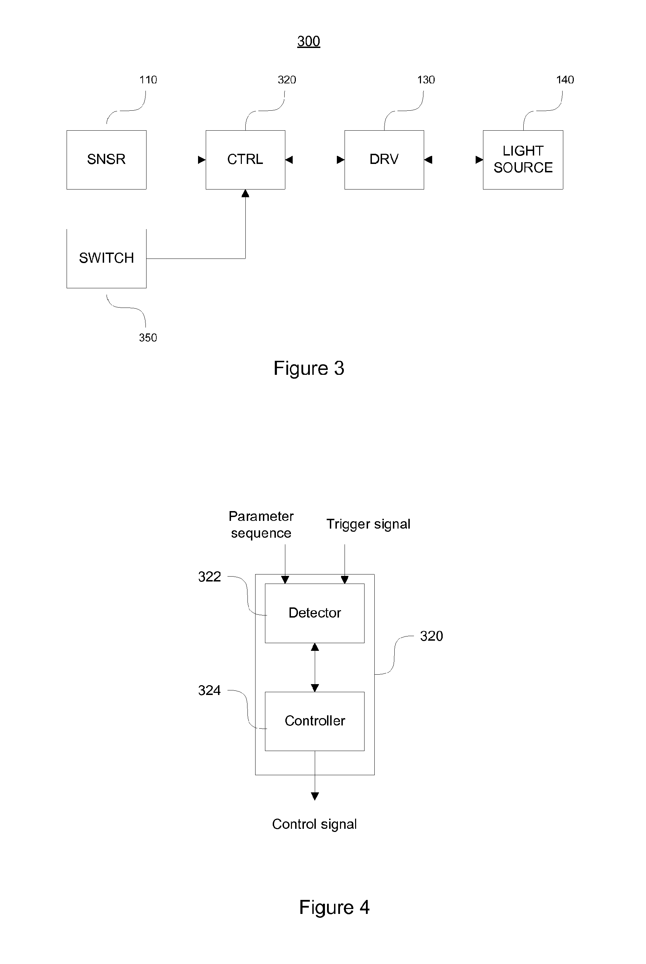

As a variation of the second example described hereinbefore, a third example is described in the following with a reference to Figure 3 (DRAW THE FIGURE!!!) schematically illustrating an arrangement 300. The arrangement 300 comprises the sensor apparatus 110, a control apparatus 320, the driver apparatus 130, the light source 140 and a switch apparatus 350. Moreover, Figure 4 schematically illustrates the control apparatus 320, comprising a detector 322 and a controller 324.

The switch apparatus 350 may be configured to issue a trigger signal for changing the current state of the light source 140 to the detector 322. The trigger signal may be configured to cause switching the light source 140 on in case the current state of the light source 140 is off or in case the light source 140 is in the preparatory mode. On the other hand, the trigger signal may be configured to cause switching the light source 140 off in case the current state of the light source 140 is on. The switch apparatus 350 may comprise a switch, closing of which may be configured to provide a trigger signal to the detector 322 e.g. by connecting the detector 322 to a power supply providing a predetermined voltage and/or a predetermined electric current. The switch may be operable by a user via a push button, pushing of which closes the switch and release of which opens the switch. Conversely, the detector 322 may be configured to obtain an indication of reception of a trigger signal at the control apparatus 320. Reception of a trigger signal may comprise, for example, receiving a signal exhibiting the predetermined voltage and/or the predetermined electric current for at least a predetermined period of time and/or not exceeding another predetermined period of time. The detector 322 may be further configured to receive a sensor signal from the sensor apparatus 110, as described hereinbefore in context of the detector 222.

Like the controller 224, the controller 324 may be configured to provide a first control signal for setting the light source 140 into a preparatory mode in response to the value of the control parameter at a first moment of time meeting the first criterion and to provide a second control signal for setting the light source 140 off in response to the value of the control parameter failing to meet the second criterion within a predetermined period of time after the first moment of time.

In particular, in the third example the first control signal may be configured to cause the light source 140 to be set into the preparatory mode without igniting the light source 140 after the preparatory period is completed. Moreover, in the third example the controller 324 may be configured to provide a third control signal configured to cause the light source 140 to be ignited in response to an indication of receiving a trigger signal at the control apparatus 320 within said predetermined period of time after the first moment of time.

Apart from the detector 322 being configured to receive an indication of reception of a trigger signal and the controller 324 being configured provide the third control signal configured to cause the light source 140 to be ignited in response to receiving a trigger signal within said predetermined period of time after the first moment of time, the apparatus 320 may be configured to operate like the apparatus 220. The driver apparatus 130 may be configured to operate with the control apparatus 320 in a manner similar to that described hereinbefore for the second example employing the apparatus 220.

In case the sequence of values of the control parameter indicating the environmental condition in the predetermined location originate from a sensor of the first type, the value of the control parameter meeting the first criterion may comprise the value of the control parameter exceeding a first predetermined threshold and the value of the control parameter meeting the second criterion may comprise the value of the control parameter exceeding a second predetermined threshold. In contrast, the value of the control parameter failing to meet the first criterion may comprise the value of the control parameter failing to exceed the first predetermined threshold and the value of the control parameter failing to meet the second criterion may comprise the value of the control parameter failing to exceed the second predetermined threshold. In such an arrangement the second predetermined threshold is typically higher than the first predetermined threshold. As described hereinbefore, a parameter value may be indicative of the probability of a presence of an object in the predetermined location originating e.g. from a sensor of the first type such as a PIR sensor or a radar apparatus.

In case the sequence of values of the control parameter indicating the environmental condition in the predetermined location originate from a sensor of the second type, the value of the control parameter meeting the first criterion may comprise the value of the control parameter failing to exceed a first predetermined threshold and the value of the control parameter meeting the second criterion may comprise the value of the control parameter failing to exceed a second predetermined threshold. In contrast, the value of the control parameter failing to meet the first criterion may comprise the value of the control parameter exceeding the first predetermined threshold and the value of the control parameter failing to meet the second criterion may comprise the value of the control parameter exceeding the second predetermined threshold. In such an arrangement the second predetermined threshold is typically lower than the first predetermined threshold. As described hereinbefore, a sensor of the second type may be for example a photoresistor, a photodiode, a LED or other sensor configured to measure the level of visible light.

The value of the control parameter, e.g. the observed level of infrared radiation, the value of the radar-based control parameter or the observed level of visible light, corresponding to respective first or second predetermined threshold is typically dependent on characteristics of the employed sensor and its position with respect to the predetermined location. Hence, the level may be determined e.g. on experimental basis in view of the employed sensor and its position. On the other hand, the level may be based on a generic value that is characteristics of the employed sensor without consideration of its position with respect to the first location.

In case there is a preparatory period required before setting the light source 140 to the on state from the off state, the duration, i.e. the temporal length, of the predetermined period of time after the first moment of time may be selected in accordance with the duration of the preparatory period.

The duration of the predetermined period is preferably equal to or essentially equal to the duration of the preparatory period, e.g. the duration of the pre-heating period required by a given fluorescent lamp. Such a selection of the duration of the predetermined period may avoid turning on the light source 140 in case the environmental condition that triggered provision of the first control signal for setting the light source 140 into the preparatory mode has failed to change during the preparatory period into one that would trigger the light source 140 to be turned on.

In particular, the duration of the predetermined period is preferably equal to or essentially equal to a maximum duration of the preparatory period for a given light source 140. The controller 224, 324 may obtain indication of the maximum duration of the preparatory period as pre-stored information at the apparatus 220, 320, or the driver apparatus 130 may have knowledge of the maximum duration of the preparatory period and the driver apparatus 130 may provide this information to the control apparatus 120. Employing a maximum duration of the preparatory period as basis for setting the duration of the predetermined period may facilitate energy-efficient operation of the light source 140 by avoiding excessive periods of the light source 140 being kept in the preparatory mode.

As described hereinbefore, the duration of the preparatory period may depend on a condition associated with the light source 140. As an example, a fluorescent lamp may require pre-heating until its cathodes are heated to a desired temperature suitable for igniting the fluorescent lamp and the (estimated) time required to reach the desired temperature may depend on the current temperature of the cathodes of the fluorescent lamp. Consequently, in case an estimate of the time required for pre-heating the cathodes to the desired temperature is available at the driver apparatus 130, the estimate may be provided to the control apparatus 120 and the control apparatus 120 may be configured to set the duration of the predetermined period on basis of the estimated time required for pre-heating the cathodes of the fluorescent lamp, e.g. to a value that is equal to or essentially equal to the estimated time required for pre-heating the cathodes.

The description hereinbefore (implicitly) assumes the detector 222, 322 to obtain a single sequence of values of a control parameter. However, the detector 222, 322 may be configured to obtain two or more sequences of values of control parameters, each sequence providing values of control parameters indicating a respective environmental condition in a respective predetermined location. The two or more sequences may originate from two or more sensors of a single sensor apparatus 110 or the two or more sequences may originate from two or more sensors comprised in two or more sensor apparatuses 110.

The two or more sensors may be configured to measure an environmental condition of a similar type, e.g. PIR sensors configured to measure the level of infrared light or photodiodes configured to measure the level of visible ambient light. Consequently, the controller 224, 324 may be configured to determine one or more control signals in dependence of received values of the control parameters in the two or more sensor signals.

As an example, the controller 224, 324 may be configured to issue the first control signal in response to a predetermined number of the sensor signals exhibiting characteristics meeting a first composite criterion and/or in response to a composite measure derived on basis of the two or more sensor signals meeting a second composite criterion. A composite measure may be determined e.g. as an average of the values of the control parameters received in one or more sensor signals of the two or more sensor signals. Similarly, the controller 224, 324 may be configured to issue the second control signal in response to a predetermined number of sensor signals exhibiting characteristics failing to meet a third composite criterion and/or in response to the composite measure failing to meet a fourth composite criterion.

Alternatively or additionally, the two or more sensors may be configured to measure an environmental condition of different types, e.g. one or more PIR sensors configured to measure infrared light and one or more photodiodes configured to measure the level of visible light. Consequently, the controller 224, 324 may be configured to determine one or more control signals in dependence of received values of the control parameters in the two or more sensor signals.

As an example, the controller 224, 324 may be configured to issue the first control signal in response to the sensor signal(s) originating from one or more sensors of the first type, e.g. from one or more PIR sensors, exhibiting characteristics meeting a composite criterion related to the sensor signals of the first type and to sensor signal(s) originating from one or more sensors of the second type, e.g. from one or more photodiodes, exhibiting characteristics meeting a second composite criterion related to the sensor signals of the second type. Similarly, the controller 224, 324 may be configured to issue the second control signal in response to sensor signal(s) originating from one or more sensors of the first type exhibiting characteristics failing to meet a third composite criterion related to the sensor signals of the first type and to sensor signal(s) originating from one or more sensors of the second type exhibiting characteristics failing to meet a fourth composite criterion related to the sensor signals of the second type.

The apparatus 220, 320 may be implemented as dedicated apparatus or the apparatus 220, 320 may be implemented as a logical entity within another apparatus, for example the control apparatus 120 or the driver apparatus 130.

Moreover, the operations, procedures and/or functions assigned to the structural units of the apparatus 220, 320, i.e. the detector 222, 322 and/or to the controller 224, 324, as described hereinbefore may be divided between these units in a different manner, or the apparatus 220, 320 may comprise further units that may be configured to perform some of the operations, procedures and/or functions described hereinbefore for the detector 222, 322 and/or the controller 224, 324.

On the other hand, the operations, procedures and/or functions the detector 222, 322 and the controller 224, 324 are configured to perform may be assigned to a single processing unit within the apparatus 220, 320 instead. As an example, the apparatus 220, 320 for controlling operation of a light source 140 may comprise means for obtaining a sequence of values of a control parameter indicating an environmental condition in a predetermined location, means for providing a first control signal for setting the light source 140 into a preparatory mode in response to the value of the control parameter at a first moment of time meeting a first criterion for setting the light source 140 into preparatory mode, and means for providing a second control signal for setting the light source 140 off in response to the value of the control parameter failing to meet a second criterion for igniting the light source 140 within a predetermined period of time after the first moment of time.

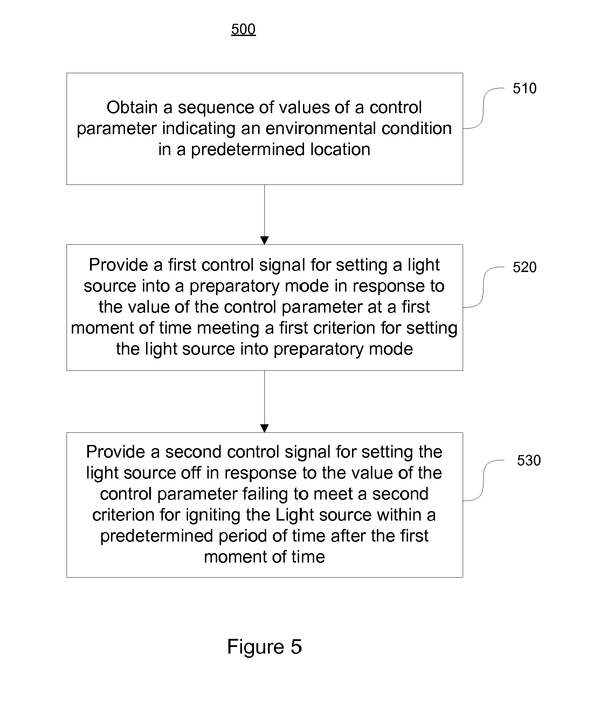

The operations, procedures and/or functions described hereinbefore in context of the apparatus 220, 320 may also be expressed as steps of a method implementing the corresponding operation, procedure and/or function. As an example, Figure 5 illustrates a method 500 in accordance with an embodiment of the invention. The method 500 may be arranged to control operation of a light source 140, the method 500 comprising obtaining a sequence of values of a control parameter indicating an environmental condition in a predetermined location as indicated in step 510. The method 500 further comprises providing a first control signal for setting the light source 140 into a preparatory mode in response to the value of the control parameter at a first moment of time meeting a first criterion for setting the light source 140 into preparatory mode, as indicated in step 520. The method 500 further comprises providing a second control signal for setting the light source 140 off in response to the value of the control parameter failing to meet a second criterion for igniting the light source 140 within a predetermined period of time after the first moment of time, as indicated in step 530.

The apparatus 220, 320 may be implemented as hardware alone, for example as an electric circuit, as a programmable or non-programmable processor, as a microcontroller, etc. The apparatus 220, 320 may have certain aspects implemented as software alone or can be implemented as a combination of hardware and software.

The apparatus 220, 320 may be implemented using instructions that enable hardware functionality, for example, by using executable computer program instructions in a general-purpose or special-purpose processor, which executable computer program instructions may be stored on a computer readable storage medium to be executed by such a processor. The apparatus 220, 320 may further comprise a memory as the computer readable storage medium the processor is configured to read from and write to. The memory may store a computer program comprising computer-executable instructions that control the operation of the apparatus 220, 320 when loaded into the processor. The processor is able to load and execute the computer program by reading the computer-executable instructions from the memory.

While the processor and the memory are hereinbefore referred to as single components, the processor may comprise one or more processors or processing units and the memory may comprise one or more memories or memory units.

The memory may store a computer program comprising computer-executable instructions that control the operation of the apparatus 220, 320 when loaded into the processor. As an example, the computer program may include one or more sequences of one or more instructions. The computer program may be provided as a computer program code. The processor is able to load and execute the computer program by reading the one or more sequences of one or more instructions included therein from the memory. The one or more sequences of one or more instructions may be configured to, when executed by one or more processors, cause an apparatus, for example the apparatus 220, 320 to implement operations, procedures and/or functions described hereinbefore in context of the apparatus 220, 320.

The computer program may be provided at the apparatus 220, 320 via any suitable delivery mechanism. As an example, the delivery mechanism may comprise at least one computer readable non-transitory medium having program code stored thereon, the program code which when executed by an apparatus cause the apparatus at least implement processing in accordance with operations, procedures and/or functions described hereinbefore in context of the apparatus 220, 320. The delivery mechanism may be for example a computer readable storage medium, a computer program product, a memory device, a record medium such as a CD-ROM or a DVD, an article of manufacture that tangibly embodies the computer program, etc. As a further example, the delivery mechanism may be a signal configured to reliably transfer the computer program.

Reference to a processor or a processing unit should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. An apparatus for controlling operation of a light source, the apparatus comprising
a detector configured to obtain a sequence of values of a control parameter indicating an environmental condition in a predetermined location,
**characterized in that** the apparatus comprises a controller configured to
provide a first control signal for setting the light source into a preparatory mode in response to the value of the control parameter at a first moment of time meeting a first criterion for setting the light source into preparatory mode, and
provide a second control signal for setting the light source off in response to the value of the control parameter failing to meet a second criterion for igniting the light source within a predetermined period of time after the first moment of time.

2. An apparatus according to claim 1,
wherein the first control signal is configured to cause the light source to be set into the preparatory mode and to cause the light source to be ignited after completion of the preparatory mode.

3. An apparatus according to claim 1,
wherein the first control signal is configured to cause the light source to be set into the preparatory mode without igniting the light source, and wherein the controller is configured to provide a third control signal configured to cause the light source to be ignited in response to the value of the control parameter meeting the second criterion within said predetermined period of time after the first moment of time.

4. An apparatus according to claim 1,
wherein the detector is further configured to receive an indication of reception of a trigger signal for turning the light source on,
wherein the first control signal is configured to cause the light source to be set into the preparatory mode without igniting the light source, and wherein the controller is configured to provide the third control signal configured to cause the light source to be ignited in response to receiving a trigger signal within said predetermined period of time after the first moment of time.

5. An apparatus according to any of claims 1 to 4,
wherein the value of the control parameter meeting the first criterion comprises the value of the control parameter exceeding a first predetermined threshold, and
wherein the value of the control parameter meeting the second criterion comprises the value of the control parameter exceeding a second predetermined threshold,
wherein the second predetermined threshold is higher than the first predetermined threshold.

6. An apparatus according any of claim 5, wherein the value of the control parameter is indicative of the probability of a presence of a person in the predetermined location.

7. An apparatus according to claim 6, wherein the value of the control parameter is determined on basis of a level of infrared radiation in the predetermined location.

8. An apparatus according to any of claims 1 to 3,
wherein the value of the control parameter meeting the first criterion comprises the value of the control parameter failing to exceed a first predetermined threshold, and
wherein the value of the control parameter meeting the second criterion comprises the value of the control parameter failing to exceed a second predetermined threshold,
wherein the second predetermined threshold is lower than the first predetermined threshold.

9. An apparatus according to claim 8, wherein the value of the control parameter is indicative of the observed level of ambient light in a predetermined location.

10. An apparatus according any of claims 1 to 9, wherein the detector comprises a sensor configured to obtain the value of the control parameter in the predetermined location.

11. A method for controlling operation of a light source, the method comprising
obtaining a sequence of values of a control parameter indicating an environmental condition in a predetermined location,
**characterized in that** the method further comprises
providing a first control signal for setting the light source into a preparatory mode in response to the value of the control parameter at a first moment of time meeting a first criterion for setting the light source into preparatory mode, and
providing a second control signal for setting the light source off in response to the value of the control parameter failing to meet a second criterion for igniting the light source within a predetermined period of time after the first moment of time.

12. A method according to claim 11, wherein the first control signal is configured to cause the light source to be set into the preparatory mode and to cause the light source to be ignited after completion of the preparatory mode.

13. A method according to claim 11,
wherein the first control signal is configured to cause the light source to be set into the preparatory mode without igniting the light source,
the method further comprising providing a third control signal configured to cause the light source to be ignited in response to the value of the control parameter meeting the second criterion within said predetermined period of time after the first moment of time.

14. A method according to claim 11 or 13, further comprising receiving an indication of reception of a trigger signal for turning the light source on,
wherein the first control signal is configured to cause the light source to be set into the preparatory mode without igniting the light source,
the method further comprising providing a third control signal configured to cause the light source to be ignited in response to receiving a trigger signal within said predetermined period of time after the first moment of time.

15. A computer program for controlling operation of a light source, the computer program including one or more sequences of one or more instructions which, when executed by one or more processors, cause an apparatus to at least perform the method according to any of claims 11 to 14.

16. An arrangement for controlling operation of a light source, the arrangement comprising
a control apparatus according to any of claims 1 to 9,
a sensor apparatus for providing the sequence of values of a control parameter to the control apparatus, and
a driver apparatus for driving a light source in accordance with the first and second control signals provided by the control apparatus.

17. An arrangement according to claim 16, wherein the light source comprises a fluorescent lamp, wherein the driver apparatus comprises an electronic ballast for driving the fluorescent lamp, and wherein the preparatory period comprises a pre-heating period of the fluorescent lamp.
